# EUROPÄISCHE PATENTSCHRIFT

(11) **EP 0 862 055 B1**
(45) Veröffentlichungstag und Bekanntmachung des Hinweises auf die Patenterteilung: **08.05.2002**
(21) Anmeldenummer: 98103369.9
(22) Anmeldetag: 26.02.1998
(51) Int. Cl.: G01N 21/65, G01N 21/64

(54) **Verfahren zur Ermittlung des Vernetzungsgrads von vernetzten Haftklebstoffschichten**
Method for determining the degree of crosslinking of crosslinked contact adhesive layers
Procédé pour déterminer le degré de réticulation de couches d'adhésif à contact réticulé

(30) Priorität: 27.02.1997 DE 19707967
(43) Veröffentlichungstag der Anmeldung: 02.09.1998
(73) Patentinhaber: BASF AKTIENGESELLSCHAFT, 67056 Ludwigshafen (DE)
(72) Erfinder: Meyer-Roscher, Bernd, Dr., 67363 Lustadt (DE); Schrof, Wolfgang, Dr., 67271 Neuleiningen (DE)
(74) Vertreter: Isenbruck, Günter, Dr.

(56) Entgegenhaltungen:
- EP-A- 0 822 395
- WO-A-94/18592
- WO-A-97/03346
- US-A- 5 329 352

## Beschreibung

Die Erfindung betrifft ein Verfahren zur Ermittlung des Vernetzungsgrads von Haftklebstoffschichten, die durch Strahlung vernetzt worden sind. Das Verfahren gemäß der Erfindung ist insbesondere bestimmt und geeignet, den Vernetzungsgrad in Abhängigkeit von der Tiefe innerhalb der Haftklebstoffschicht zu ermitteln.

Haftklebstoffe der neueren Generation basieren auf lösemittelfreien Schmelzhaftklebern, die nach dem Aufbringen als Schicht auf eine Unterlage bzw. ein Substrat durch Bestrahlen, insbesondere mit UV-Licht, vernetzt werden können. Derartige Klebstoffe sind z.B. von Auchter, Barwich, Rehmer und Jäger in dem Artikel "UV-vernetzbare Acrylat-Schmelzhaftklebstoffe" in "kleben & dichten" 37 (1993), Seite 14 bis 20 und in den EP-A 377 199 und 448 741 beschrieben. Das Grundpolymere wird so hergestellt, daß es sich in der Nähe des sogenannten Gelpunktes befindet. Mit Hilfe von Photoinitiatoren, die entweder zugemischt oder chemisch gebunden werden, sensibilisiert man das Polymere gegenüber energiereicher Strahlung, insbesondere der UV-A-Strahlung. Durch die gezielte Belichtung mit einer bestimmten UV-Dosis läßt sich der Vernetzungsgrad des Polymeren einstellen. Dieser Vernetzungsgrad bestimmt maßgeblich die Endeigenschaften des Haftklebstoffs. So kann z.B. mit ein und demselben Polymeren, nur durch Bestrahlung mit unterschiedlichen UV-Dosen, ein sehr klebriges Haftetikett hergestellt werden, das sogar noch auf feuchten Untergründen haftet, oder ein Klebeetikett, das so weit vernetzt ist, daß es sich rückstandsfrei von beliebigen Oberflächen wieder abziehen läßt.

Nun lassen sich solche Endeigenschaften auf zwei Arten einstellen. Zum einen auf die oben beschriebene, daß nämlich nur mit so viel UV-Licht bestrahlt wird, bis die gewünschten Eigenschaften eingestellt sind. Dies erfordert einen beträchtlichen Aufwand bezüglich der UV-Steuerung einer kontinuierlichen Beschichtungs/Bestrahlungsanlage. Die UV-Strahlerleistung muß hier exakt auf die Bandgeschwindigkeit, z.B. bei der Etikettenbeschichtung, eingestellt sein. Eine "Überbelichtung" würde sonst die Produkteigenschaften drastisch ändern.

Eine Methode, bei der dieser Aufwand nicht betrieben werden muß, ist die gezielte Modifikation des Polymeren vom Klebstoffhersteller. Wird bei der Klebstoffsynthese nur so viel Photoinitiator zugegeben, wie für die Einstellung der Endeigenschaften notwendig ist, dann ist die Gefahr einer "Überbelichtung" nicht mehr gegeben. Der Beschichter muß dann nur noch eine Mindeststrahlungsdosis beachten, läuft aber nicht mehr Gefahr, das Produkt zu stark zu vernetzen.

Ein weiterer wesentlicher Punkt ist die Kostenfrage. Normalerweise gehört ein Photoinitiator zu den teuersten Einsatzstoffen eines Polymersystems. Wenn nun die Photoinitiatormenge exakt auf die Endanwendung abgestimmt ist, kann auf überschüssige und im Endprodukt nicht umgesetzte Photoinitiatormengen verzichtet werden.

Kritisch in diesem Zusammenhang ist weiterhin die Langzeitstabilität von Produkten, die auf Basis von UV-vernetzbaren Polymeren hergestellt wurden, in denen sich noch sehr viel unumgesetzte Photoinitiatormengen befinden.

Werden z.B. derartige transparente Klebebänder starker Sonneneinstrahlung ausgesetzt, so ist es möglich, daß die Photoinitiatoren durch den UV-Anteil des Sonnenlichts angeregt werden und zu einem Nachvernetzen des Produkts führen. Diese Nachvernetzung beeinflußt aber die Klebeeigenschaften dramatisch, und zwar um so stärker, je mehr reaktiver Photoinitiator vorhanden ist.

Es ergibt sich somit, daß es wünschenswert ist, ein Verfahren zu besitzen, mit dem sich der Vernetzungsgrad von Haftkleberschichten zuverlässig bestimmen läßt. Besonders wichtig ist es, die Abhängigkeit des Vernetzungsgrads einer Schicht von ihrer Tiefe zu kennen. Gerade bei dickeren Haftklebstoffschichten, bei denen man nach der UV-Bestrahlung mit einem Vernetzungsgradienten über die Dicke der Klebstoffschicht rechnen muß, ist es wichtig, den Unterschied zwischen dem Vernetzungsgrad an der Oberfläche der Schicht und deren unteren Lagen unmittelbar oberhalb der Substratoberfläche zu kennen. Als Beispiel hierfür seien Haftklebstoffschichten von Hautpflastern genannt. Die Haftung zum Gewebe muß deutlich besser sein als die Haftung auf der Haut, sonst ließe sich der Klebstoff entweder nicht rückstandsfrei von der Haut entfernen oder das Abziehen wäre äußerst schmerzhaft. Dementsprechend muß hier an den beiden Oberflächen der Haftklebstoffschicht ein unterschiedlicher Vernetzungsgrad eingestellt werden.

Man hat bereits versucht, durch Infrarotabsorptionsmessung Vernetzungsgrade in unterschiedlicher Tiefe zu messen. Die dabei erhaltenen Ergebnisse sind jedoch nicht aussagekräftig, weil die IR-Messung in Transmission integral und nicht schichtselektiv ist.

Auch mit der Kernresonanzspektroskopie lassen sich keine schichtselektiven Ergebnisse erzielen.

Aufgabe der Erfindung war es, ein Verfahren vorzuschlagen, die es ermöglichen, den Vernetzungsgrad von Haftkleberschichten zuverlässig in unterschiedlichen Tiefen der Schicht zu ermitteln.

Erfindungsgemäß wird ein Verfahren zur Ermittlung des Vernetzungsgrads von vernetzten Haftklebstoffschichten aus vernetzbaren oligomeren oder polymeren Verbindungen und strahlungsempfindlichen Photoinitiatoren in unterschiedlicher Tiefe der Schicht durch spektroskopische Messung gemäß Anspruch 1 vorgeschlagen.

Die Photoinitiatoren liegen in der Haftklebstoffschicht vorzugsweise chemisch, z.B. durch Covalenzen an die vernetzbaren Verbindungen gebunden vor. Als Photoinitiatoren sind in an sich bekannter Weise alle Verbindungen geeignet, die durch Bestrahlung mit UV-Licht in einen angeregten Zustand übergehen können, in dem sie mit den vernetzbaren Verbindungen zu reagieren vermögen. Als besonders geeignet für diesen Zweck haben sich aromatische Carbonylverbindungen, insbesondere Benzophenon, seine Derivate und Substitutionsprodukte - die hier zusammengefaßt als Benzophenonverbindungen bezeichnet werden - erwiesen. Bei der Vernetzung reagieren nach gegenwärtigem Kenntnisstand durch Strahlung aktivierte Carbonylgruppen unter Ausbildung einer Benzhydrol-Vernetzungsstruktur, wie es in der eingangs genannten Veröffentlichung "UV-vernetzbare Acrylat-Schmelzhaftklebstoffe" beschrieben ist.

Bei der Umsetzung reagieren die Benzophenonreste ab, das heißt charakteristische Banden im Spektrum verschwinden.

Als vernetzbare Verbindungen kommen insbesondere Polymere und Oligomere von (Meth)acrylestern in Betracht. Geeignete Verbindungen sind unter anderem in der EP-A 448 741 beschrieben.

Dies sind Copolymere von (Meth)acrylsäurederivaten, die durch Phenonreste, insbesondere Benzophenonreste, substituiert sind, mit unsubstituierten (Meth)acrylsäureestern.

### Beispiele sind Ester der folgenden Alkohole:

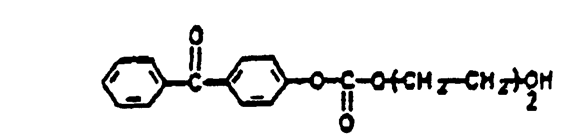

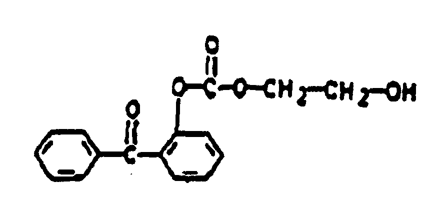

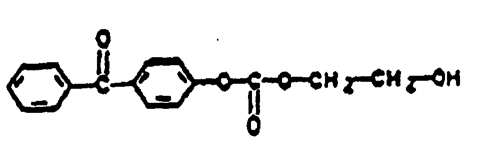

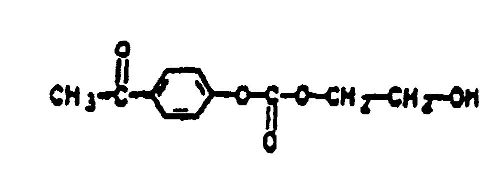

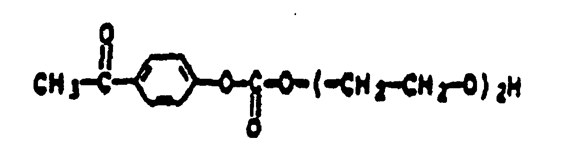

Auch die folgenden (Meth)acrylsäurederivate sind als einzupolymerisierende Derivate von Benzophenonen geeignet:

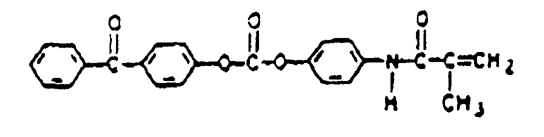

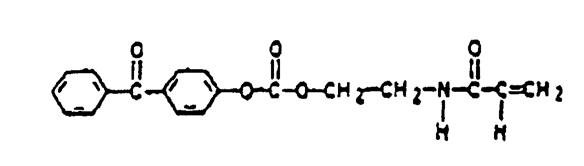

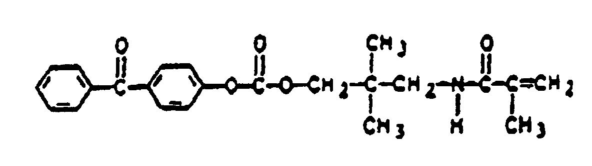

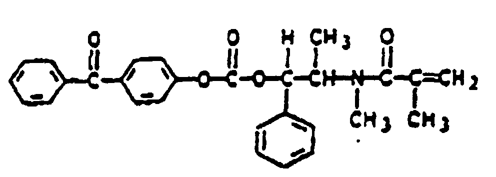

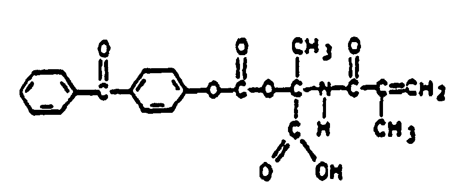

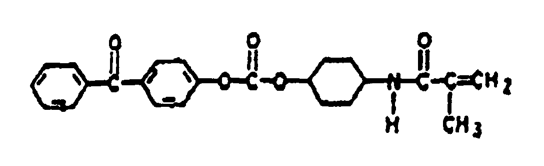

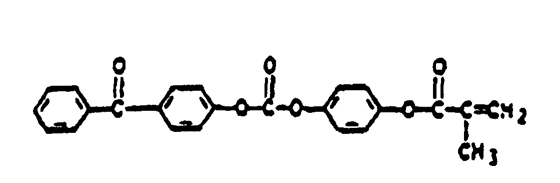

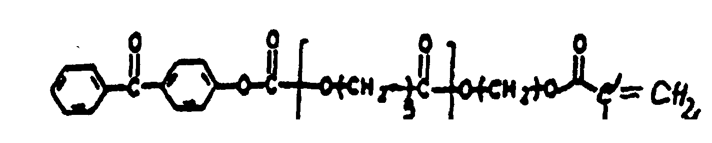

Die Copolymeren können auch Einheiten von anderen Monomeren mit funktionellen Gruppen, z.B. OH-Gruppen, z.B. von Hydroxyalkyl(meth)acrylaten, in kleinerer Menge, z.B. bis zu 20 Gew.-%, enthalten. Auch makromolekulare (Meth)acrylsäureester, z.B. solche die einen Polystyrolrest enthalten, können eingesetzt werden.

Hauptbestandteil der vernetzbaren Polymeren oder Oligomeren sind Einheiten, die aus Monomeren entstanden sind, deren Homopolymerisate Glastemperaturen (T_{g}-Werte) unter 0°C, vorzugsweise unterhalb -10°C haben, z.B. aus n-und iso-Butylacrylat oder -methacrylat, i-Amyl-, i-Octyl(meth)acrylat, 2-Ethylhexyl(meth)acrylat, Decyl- oder Lauryl(meth)acrylat. Der Anteil dieser Einheiten sollte vorzugsweise mindestens 60 Gew.-% des Polymeren betragen.

Die Polymeren enthalten im allgemeinen 0,1 bis 15 Gew.-% an Einheiten mit Photoinitiatorresten; häufig reichen schon 0,01 bis 5 Gew.-% aus.

Die Herstellung der vernetzbaren Oligomeren oder Polymeren erfolgt zweckmäßig durch Copolymerisation der Monomeren in Gegenwart von üblichen Polymerisationsinitiatoren und gegebenenfalls von Reglern in der Masse, in Emulsion, z.B. in Wasser oder flüssigen Kohlenwasserstoffen, oder in Lösung. Vorzugsweise werden die Copolymeren durch Polymerisation in Lösemitteln, insbesondere solchen eines Siedebereichs von 50 bis 150, vorzugsweise 60 bis 120°C, z.B. in Alkoholen mit 1 bis 4 Kohlenstoffatomen oder in Kohlenwasserstoffen wie Toluol oder Benzinfraktionen eines Siedebereichs von 60 bis 120°C, hergestellt. Auch Ketone und Ester können eingesetzt werden.

Als Polymerisationsinitiatoren können bei der Lösungspolymerisation die üblichen, wie Azo- und organische Peroxyverbindungen, eingesetzt werden.

Bei der Emulsionspolymerisation können zu Beispiel anorganische Peroxyverbindungen wie Natrium-, Kalium- oder Ammoniumperoxydisulfat verwendet werden. Nach der Polymerisation können die Lösungs- bzw. Dispersionsmittel, gegebenenfalls unter vermindertem Druck, abdestilliert werden. Die Copolymeren können dann in lösemittelfreiem Zustand, d.h. als Schmelzen, auf das gewünschte Substrat aufgebracht werden.

Die vernetzbaren Massen können generell als Schmelzen, als Lösungen oder Dispersionen verarbeitet werden. Sie eignen sich insbesondere zur Herstellung von Haftklebern, Haftklebefolien und Haftklebeetiketten sowie auch von Prägezangenfolien. Dabei können die Massen in üblicher Weise, gegebenenfalls bei erhöhter Temperatur, etwa bei 20 bis 150°C auf übliche Substrate, wie Papier, Pappe, Holz, Metalle und Kunststoffolien, z.B. aus weichgemachtem PVC, Polyethylen, Polyamiden, Polyestern oder Polypropylen, aufgebracht werden.

Die gegebenenfalls getrockneten oder vorgetrockneten Aufträge werden anschließend durch Bestrahlen mit UV-Licht vernetzt, wobei man gut klebende Überzüge erhält, die eine hohe Kohäsion und eine gute Schälfestigkeit bei vorzüglicher Alterungsbeständigkeit aufweisen. Dabei braucht nicht unter Inertgasatmosphäre bestrahlt zu werden, man kann vielmehr an der Luft arbeiten. Als UV-Strahler können die üblichen Strahler, z.B. Quecksilberdampfnieder-, -mittel- und -hochdrucklampen eingesetzt werden. In manchen Fällen kann bei der vernetzenden Bestrahlung gleichzeitig durch den IR-Anteil der Lampen restliches Lösemittel oder Wasser entfernt werden.

Erfindungsgemäß wird der Vernetzungsgrad der vernetzten Haftklebstoffschichten durch Raman- oder Fluoreszenzspektroskopie bestimmt, wobei anhand der Intensität charakteristischer Spektralbanden der Grad der Umsetzung des Photoinitiators ermittelt wird.

Die Ramanspektroskopie erlaubt über die Analyse von Molekülschwingungen eine chemische Identifizierung ähnlich wie die weitverbreitete Infrarotspektroskopie.

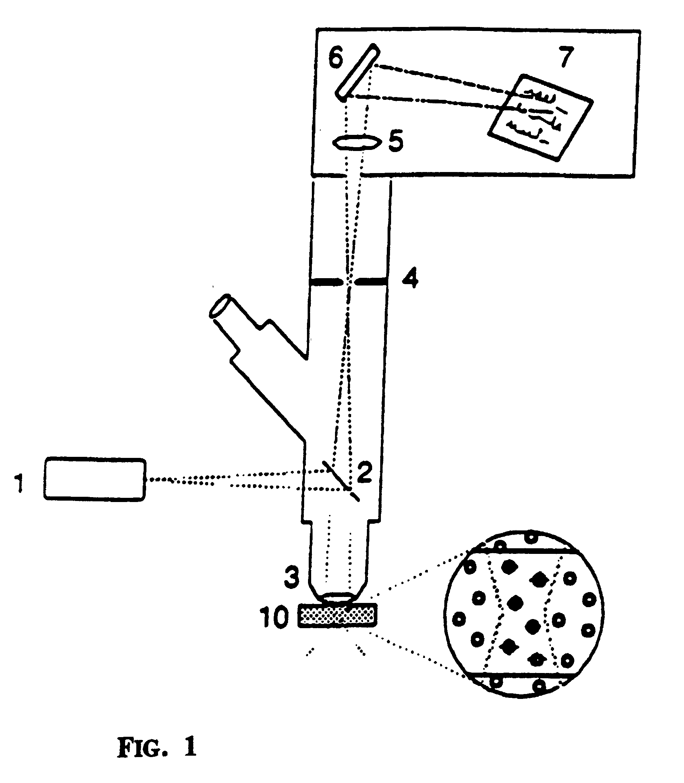

Die konfokale Ramanmikroskopie vereinigt die chemische Strukturinformation der Ramanspektroskopie mit der hohen Ortsauflösung konfokaler optischer Mikroskopie von ca. 1 µm³ (siehe Figur 1). Der Aufbau verknüpft ein konfokales Mikroskop mit einem Ramanspektrometer derart, daß ein Laser über die Abbildungsoptik des Mikroskops auf ein sehr kleines Meßvolumen fokussiert wird. Das entstandene Ramanlicht wird im Nachweisstrahlengang zuerst vom Laserlicht spektral getrennt (z.B. über ein holografisches Notchfilter). Über eine konfokale Blende im Nachweisstrahlengang wird die Tiefenebene selektiert und somit das Meßvolumen dreidimensional auf wenige µm³ eingegrenzt. Ein einfacher lichtstarker Gitterspektrograph kann die spektrale Zerlegung des Ramanlichts übernehmen. Die Detektion erfolgt z.B. mit einem zweidimensionalen CCD-Chip.

Neben der flächenhaften Abbildung chemischer Strukturen gelingen auch Tiefenprofile mit µm-Auflösung. Aufwendige Probenpräparationen entfallen zumeist. Eine Dotierung mit Markierungssubstanzen ist meistens unnötig.

Das erfindungsgemäße Meßverfahren ermöglicht es, den fiir die Endeigenschaften verantwortlichen Vernetzungsgrad eines Haftklebstoffs exakt zu erfassen, um vor dem Hintergrund dieses Wissens die Herstellung von UV-vernetzbaren Haftklebstoffsystemen und damit ausgestatteten Produkten sehr viel gezielter betreiben zu können.

Erfindungsgemäß wird ausgenützt, daß der Photoinitiator sich während der UV-Belichtung chemisch verändert. Diese Reaktion kann über die Abnahme charakteristischer Raman- bzw. Fluoreszenzbanden sehr exakt verfolgt werden und gibt über die Vernetzung Auskunft. Im Besonderen kann auch bestimmt werden, ob der Photoinitiator vollständig verbraucht worden ist, also keine UV-Nachhärtung befürchtet werden muß, welche die Klebwirkung verändern kann.

Neben der Erfüllung der oben aufgeführten Aufgaben kann die konfokale Raman- oder Fluoreszenzspektroskopie zur Qualitätskontrolle von Haftklebstoffprodukten herangezogen werden. Hier kommt zum einen die Qualitätskontrolle bei der Klebstoffproduktion in Betracht und zum anderen die Qualitätskontrolle beim vernetzten Klebstofffilm.
- **Figur 1**: zeigt den schematischen Aufbau einer Vorrichtung zur Anwendung der konfokalen Ramanspektroskopie bei dem erfindungsgemäßen Verfahren.
- **Figur 2**: zeigt den schematischen Aufbau einer Vorrichtung zur Anwendung der konfokalen Ramanspektroskopie mittels faseroptischer Lichtleitung bei dem erfindungsgemäßen Verfahren.

Die Vorrichtung gemäß Figur 1 beruht im wesentlichen auf einer Kombination eines konfokalen Mikroskops mit einer Laserlichtquelle und einem Raman-Spektrometer. Das Anregungslicht einer Laserlichtquelle 1 wird hier von einem Notchfilter 2 umgeleitet, so daß es über das Objektiv 3 des Mikroskops in die zu untersuchende Probe 10 gelangt. Ein Notchfilter ist für die Umlenkung besonders geeignet, weil es die bestimmte Laserwellenlänge fast vollständig reflektiert. Es können aber auch herkömmliche Spiegelanordnungen verwendet werden. Das Objektiv 3 definiert den Querschnitt des Beobachtungsvolumens in der Probe 10, da es das Anregungslicht des Lasers 1 fokussiert und der enstehende Lichtkegel die Ausbreitung des Laserlichts in der Probe senkrecht zur Einfallsrichtung begrenzt. Das in der Probe 10 inelastisch gestreute Laserlicht wird aus der Probe über das Objektiv 3 aufgenommen und über das Notchfilter 2 das dabei aus der Probe 10 reflektiertes Anregungslicht wegfiltert, zu einer konfokalen Blende 4 weitergeleitet. Diese Blende 4 wählt durch ihre Ausblendwirkung die Tiefenschärfe des Beobachtungsvolumens in der Probe 10 aus, also dessen Lage in der Probe in Einfallsrichtung des Anregungslichts. Nach der Blende 4 gelangt das Raman-Streulicht über eine Linse 5 zu einem Gitterspektrographen 6, der das Streulicht spektral zerlegt. Die einzelnen Spektrallinien werden dann zu einem zweidimensionalen CCD-Chip 7 als Photodetektor geleitet, mit dessen Hilfe die Intensität der Bande gemessen wird. Unterschiedliche Tiefen können durch Verändern des Abstands von Probe und Objektiv eingestellt werden.

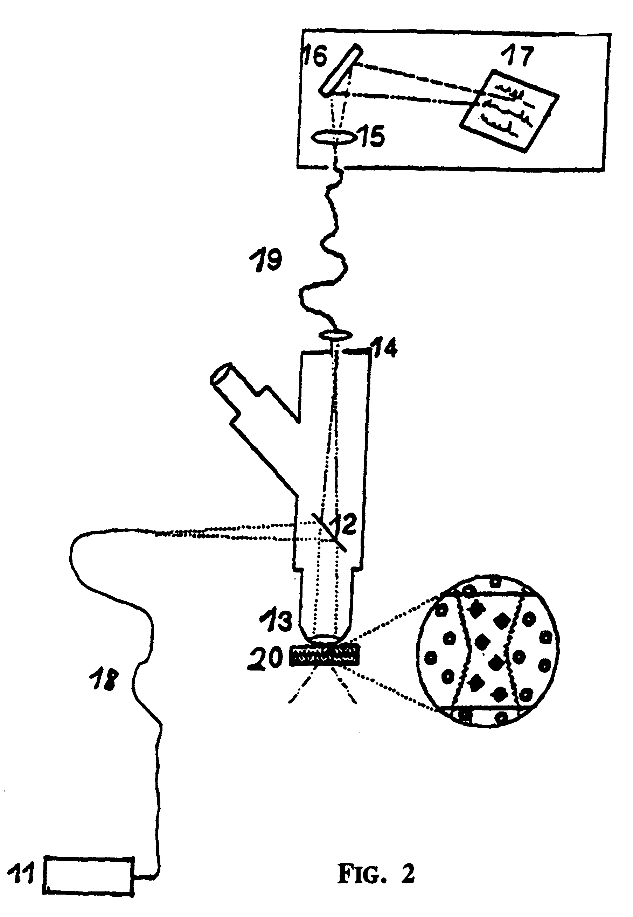

Figur 2 zeigt eine Vorrichtung, bei der, wie oben beschrieben, das Anregungslicht eines Lasers 11 über eine Monomodefaser 18, ein Notchfilter 12 und eine Linse 13 in eine Probe 20 geleitet wird. Das Raman-Streulicht wird dann über Linse 13, Notchfilter 12, eine Blende 14 und eine Multimodefaser 19 in ein Raman-Spektrometer geleitet. Darin trifft es über eine Linse 15 auf einen Gitterspektrographen 16, von wo aus spektrale Anteile des Raman-Streulichts wiederum auf einen Photodetektor 17 geleitet werden. Unterschiedliche Tiefen werden auch hier durch Verändern des Abstands von Probe und Objektiv eingestellt.

Mit einem analogen Aufbau der Meßvorrichtung kann auch der tiefenaufgelöste Vernetzungsgrad von Haftkleberschichten durch konfokale Fluoreszenzspektroskopie ermittelt werden. Dazu ist zweckmäßig in der Vorrichtung gemäß Figur 1 oder 2 als Lichtquelle eine UV-Lichtquelle und vorteilhaft anstelle des Notchfilters 2 ein Kantenfilter einzusetzen. Die Auswertung des Fluoreszenzemissionsspektrums der Probe kann in an sich bekannter Weise analog zu der vorstehend beschriebenen Ramanspektroskopie erfolgen. Auch die räumliche Trennung von Meßgerät und Mikroskop mittels faseroptischer Kopplung kann in gleicher Weise wie in Figur 2 dargestellt erfolgen.

Die Klebeeigenschaften von flächigen Substraten, die eine Haftklebeschicht aufweisen, können durch Messen der Scherfestigkeit als Maß für die Kohäsion und der Schälfestigkeit als zusammenfassendes Maß für Kohäsion und Adhäsion erfaßt werden.

Für die Prüfung werden Folien aus Polyethylenterephthalat mit einer Haftkleberschicht derart beschichtet, daß sich eine Trockenschichtdicke von 25 µm ergibt.

Für die Prüfung der lösemittelfreien Schmelzhaftkleber werden auf einem beheizten Streichtisch Polyethylenterephthalatfolien mit den Haftklebermassen bei 85 bis 120°C so beschichtet, daß sich eine Schichtdicke von etwa 25 µm ergibt.

Sofern für die Prüfung gelöste Copolymere eingesetzt werden, werden die Lösemittel 1 Minute bei 70°C und 1 bar abgedampft. Die beschichteten und getrockneten Folien werden mit dem Licht von Quecksilbermitteldrucklampen bestrahlt.

Die Bestrahlung erfolgt mit zwei hintereinander angeordneten Quecksilbermitteldrucklampen mit einer Leistung von jeweils 80 Watt/cm. Die beschichteten und getrockneten Folien werden auf ein laufendes Endlosband gelegt, so daß die beschichteten Folien in einem Abstand von 10 cm mit einer Geschwindigkeit von 20 m/min unter den Lampen hindurchlaufen.

Die Bestrahlung erfolgt an der Luft.

Die so hergestellten Folien werden in 2 cm breite Streifen geschnitten und diese Streifen auf eine verchromte Messingplatte aufgebracht. Die Platte wird mit den Streifen 24 h bei 23°C und 65 % relativer Luftfeuchtigkeit gelagert.

Zur Messung der Schälfestigkeit werden die Prüfstreifen parallel zur Klebschicht mit einer Geschwindigkeit von 300 mm je Minute rückwärts abgezogen. Die hierfür erforderliche Kraft wird gemessen.

Bei der Messung der Scherfestigkeit wird eine verklebte Fläche von 20 x 25 mm zurechtgeschnitten, die Platte senkrecht eingespannt und der überhängende Teil des Klebstreifens mit einem Gewicht von 1 kg belastet. Es wird die Zeit bestimmt, bis sich die Verklebung löst. Die Messung wird bei 21°C und 50°C durchgeführt. Alle Messungen werden dreifach gemacht.

Zur Messung des Schlingenwertes wird ein 2 cm breiter Klebstreifen von 150 mm Länge zu einer Schlinge geformt und die beiden Enden des Klebstreifens in die Klemmbacken einer Zugprüfmaschine gespannt. Die Klebstreifenschlinge wird in Kontakt mit einer Normalplatte aus nichtrostendem Stahl gebracht und das Klebeband mit einer Geschwindigkeit von 300 mm je Minute abgezogen. Die für das Abziehen des Streifens von der Stahlplatte erforderliche Kraft wird gemessen. Aus 6 Messungen wird der Mittelwert gebildet.

Die in den folgenden Beispielen angegebenen Teile und Prozente beziehen sich auf das Gewicht. Die Bestimmung der K-Werte erfolgt nach DIN53726 in 1%iger Lösung in Tetrahydrofuran bei 25°C. Die Schmelzviskositäten wurden mit einem Kegel-Platte-Rheometer z.B. Rotovisko® RV 20 mit Meßeinrichtung PK 100 (Firma Haake, Karlsruhe) gemessen (D = Schergeschwindigkeit in s⁻¹).

Der Staudingerindex (Viskositätszahl) wird in Tetrahydrofuran bei 25°C nach bekannten Methoden bestimmt (z.B. G.V. Schulz, H.-J. Cantow in Houben - Weyl, Methoden der organischen Chemie, G. Thieme Verlag, 1955, Bd. 3/1, Seiten 431 bis 445 und B. Vollmert: Grundriss der makromolekularen Chemie, Band III, Seite 55 ff.

### BEISPIEL 1

### Copolymerisatlösung P1

Zu einem Gemisch von

| | |
|---|---|
| 160 g | Ethylacetat, |
| 50 g | Tetrahydrofuran und |
| 9 g | tert.-Butylperoxy-2-ethyl-hexanoat |

wurden 150 g einer Monomerenmischung aus

| | |
|---|---|
| 500 g | Isoamylacrylat, |
| 300 g | 2-Ethyl-hexylacrylat, |
| 170 g | Methylacrylat, |
| 30 g | Acrylsäure und |
| 7,5 g | eines Benzophenonderivats der Formel |

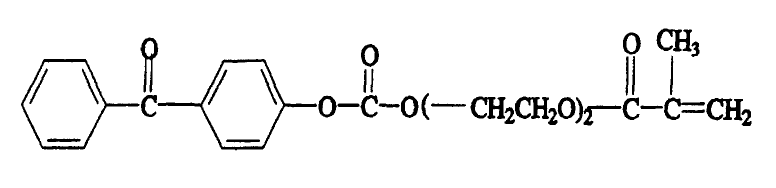

gegeben. Das Gemisch wurde bei 85°C 15 Minuten polymerisiert. Zu der Reaktionsmischung wurden innerhalb von 2 Stunden der Rest der Monomerenmischung und gleichzeitig, aber über 3 Stunden verteilt, eine Lösung von 5 g tert.-Butylperoxy-2-ethyl-hexanoat in 40 g Ethylacetat gegeben. Nach beendeter Zugabe wurde noch 5 Stunden nachpolymerisiert.

Es wurde ein Copolymeres vom K-Wert 38,5 und dem Staudinger-Index (Viskositätszahl) 0,39 erhalten. Das von Lösemittel und flüchtigen Anteilen befreite Copolymere P1 hat bei 120°C eine Schmelzviskosität von 15 Pa•s (D = 100 s⁻¹).

### BEISPIEL 2

### Copolymerisatlösung P2

Zu einem Gemisch von

| | |
|---|---|
| 160 g | Ethylacetat, |
| 50 g | Tetrahydrofuran und |
| 10 g | tert.-Butylperoxy-2-ethyl-hexanoat |

wurden 150 g einer Monomerenmischung aus

| | |
|---|---|
| 500 g | n-Butylacrylat, |
| 330 g | 2-Ethyl-hexylacrylat, |
| 150 g | Methylmethacrylat, |
| 20 g | Acrylsäure und |
| 7,5 g | eines Benzophenonderivats der Formel |

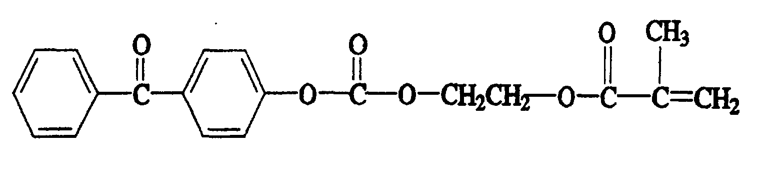

gegeben. Das Gemisch wurde bei 80°C 15 Minuten polymerisiert. Zu der Reaktionsmischung wurden innerhalb von 2 Stunden der Rest der Monomerenmischung und zugleich, aber über 3 Stunden verteilt, eine Lösung von 5 g tert.-Butylperoxy-2-ethyl-hexanoat in 40 g Ethylacetat gegeben. Nach beendeter Zugabe wurde noch 5 Stunden nachpolymerisiert.

Es wurde ein Copolymeres vom K-Wert 42 und dem Staudinger-Index 0,40 erhalten. Das von Lösemittel und flüchtigen Anteilen befreite Copolymere P2 hat bei 120°C eine Schmelzviskosität von 20 Pa•s (D = 200 s⁻¹).

### BEISPIEL 3

### Copolymerisatlösung P3

Zu einer Mischung aus 280 g eines n-hexanarmen Benzins vom Siedebereich 60 bis 95°C und 70 mg 2,2'-Azobis-isobutyronitril wurden 270 g einer Monomerenmischung aus

| | |
|---|---|
| 870 g | 2-Ethyl-hexylacrylat, |
| 100 g | Methylmethacrylat, |
| 30 g | Acrylsäure und |
| 2,0 g | des Benzophenonderivats der Formel |

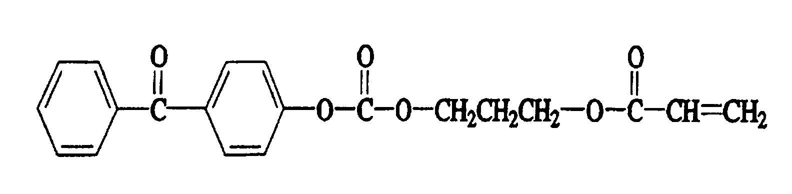

gegeben. Die Reaktionsmischung wurde 15 Minuten bei Rückflußtemperatur anpolymerisiert. Anschließend wurde im Verlauf von zwei Stunden der Rest der Monomerenmischung zugegeben und das Reaktionsgemisch nach beendeter Zugabe noch zwei Stunden unter leichtem Rückfluß gehalten. Anschließend wurden zu der Mischung 10 Gew.-% einer Lösung von 10 g tert.-Butylperoxypivalat in 50 g n-hexanarmem Benzin eines Siedebereichs von 60 bis 95°C innerhalb von 5 Minuten zugesetzt. Nach einer weiteren Stunde wurden der Rest dieser Lösung und zugleich 670 g des gleichen Benzins zugesetzt.

Es wurde die Lösung eines Copolymeren P3 mit dem K-Wert 68 erhalten.

### BEISPIEL 4

### Copolymerisat P4

Es wurde verfahren wie fiir Copolymerisat P2 angegeben, jedoch zur Polymerisation eine Lösung aus

| | |
|---|---|
| 800 g | Isoamylacrylat |
| 180 g | Vinylacetat, |
| 20 g | Methacrylsäure und |
| 7,0 g | des Benzophenonderivats der Formel |

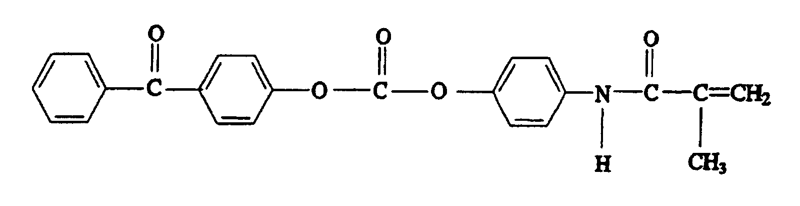

eingesetzt. Es wurde ein Copolymeres mit dem K-Wert 36,1 erhalten.

### BEISPIEL 5

### Copolymerisat P5

Es wurde verfahren wie bei Copolymerisat P2 angegeben, jedoch zur Polymerisation eine Lösung aus

| | |
|---|---|
| 900 g | Isoamylacrylat, |
| 100 g | Macromer® 13 K-RC (Styrololigomeres mit einer Methacrylsäureesterendgruppe; Hersteller Sartomer Inc.) und |
| 6,5 g | des Benzophenonderivats der Formel |

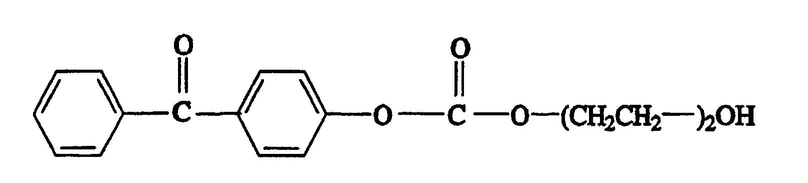

eingesetzt. Es wurde ein Copolymeres mit dem K-Wert 34,5 erhalten.

In der folgenden Tabelle sind die Ergebnisse der anwendungstechnischen Prüfung der beschriebenen Polymeren als Haftkleber zusammengestellt.

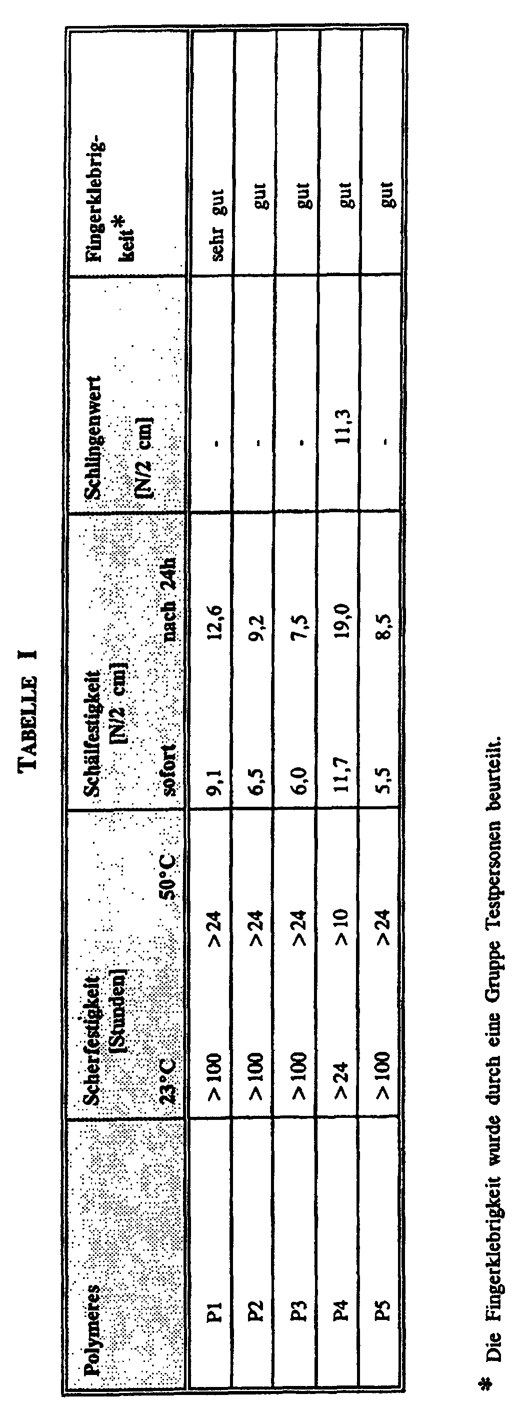

## Patentansprüche

1. Verfahren zur Ermittlung des Vernetzungsgrads von vemetzten Haftklebstoffschichten aus vernetzbaren oligomeren oder polymeren Verbindungen und strahlungsempfindlichen Photoinitiatoren in unterschiedlicher Tiefe der Schicht durch spektroskopische Messung, **dadurch gekennzeichnet, dass** man
- mittels einer Lichtquelle Anregungslicht erzeugt,
- mittels einer mit der Lichtquelle verbundenen ersten Optik das Anregungslicht in eine Probe der Haftklebstoffschicht einleitet,
- mittels einer mit der Probe verbundenen zweiten Optik Raman-Streulicht oder Fluoreszenzlicht sammelt und in einen Spektrographen weiterleitet,
- mittels eines mit der zweiten Optik verbundenen Spektrographen das Raman-Streulicht oder das Fluoreszenzlicht aus der Probe in Spektrallinien zerlegt, und
- mittels eines Photodetektors die Intensität einer Spektrallinie bestimmt.

2. Verfahren nach Anspruch 1, **dadurch gekennzeichnet, dass** die Photoinitiatoren mit den vernetzbaren Verbindungen kovalent verknüpft sind.

3. Verfahren nach Anspruch 1, **dadurch gekennzeichnet, dass** man einen Photoinitiator einsetzt, der bei der Vernetzungsreaktion abreagiert, und dass man den Vernetzungsgrad durch Messung der Intensität einer Spektrallinie des Photoinitiators ermittelt.

4. Verfahren nach Anspruch 1, **dadurch gekennzeichnet, dass** man durch Fokussieren des Messstrahls auf unterschiedliche Tiefen innerhalb der Klebstoffschicht einen Tiefengradienten der Vernetzung ermittelt.

5. Verfahren nach Anspruch 1 oder 4, **dadurch gekennzeichnet, dass** man zur Selektion der Tiefenebene die Fokusposition in der Probe durch Translation der Probe über einen Verschiebetisch oder durch Translation des Fokus durch die Probe, vorzugsweise mittels eines piezomechanisch bewegten Objektivs, verändert.

## Claims

1. A method of determining the degree of crosslinking of crosslinked films of pressure-sensitive adhesive, comprising crosslinkable oligomeric or polymeric compounds and radiation-sensitive photoinitiators, at different depths of the film by means of spectroscopic measurement, which comprises
- generating exciting light by means of a light source,
- introducing the exciting light into a sample of the film of pressure-sensitive adhesive by means of a first optical system connected to the light source,
- collecting and passing on into a spectrograph Raman scattered light or fluorescent light by means of a second optical system connected to the sample,
- dispersing the Raman scattered light or the fluorescent light from the sample into spectral lines by means of a spectrograph connected to the second optical system, and
- determining the intensity of a spectral line by means of a photodetector.

2. A method as claimed in claim 1, wherein the photoinitiators are linked covalently to the crosslinkable compounds.

3. A method as claimed in claim 1, wherein a photoinitiator is employed which is consumed in the crosslinking reaction and wherein the degree of crosslinking is determined by measuring the intensity of a spectral line of the photoinitiator.

4. A method as claimed in claim 1, wherein a depth gradient of crosslinking is determined by focussing the measurement beam onto different depths within the film of adhesive.

5. A method as claimed in claim 1 or 4, wherein to select the depth level the focus position in the sample is altered by translation of the sample over a movable stage or by translation of the focus through the sample, preferably by means of a piezomechanically movable objective.

## Revendications

1. Procédé de détermination du taux de réticulation de couches réticulées de colle autoadhésive, constituées de composés oligomères ou polymères réticulables et de composés photoexcitants photosensibles, à des profondeurs différentes de la couche, au moyen d'une mesure spectroscopique, **caractérisé en ce que** l'on
- crée une lumière d'excitation au moyen d'une source lumineuse,
- fait passer la lumière d'excitation dans un échantillon de la couche de colle autoadhésive au moyen d'un premier instrument optique qui est connecté à la source lumineuse,
- collecte la lumière de diffusion Raman ou la lumière de fluorescence au moyen d'un deuxième instrument optique qui est connecté à l'échantillon, et qu'on la transmet à un spectrographe,
- disperse la lumière de diffusion Raman ou la lumière de fluorescence provenant de l'échantillon, au moyen d'un spectrographe connecté au deuxième instrument optique, pour obtenir des raies spectrales, et
- détermine l'intensité d'une raie spectrale au moyen d'un photodétecteur.

2. Procédé selon la revendication 1, **caractérisé en ce que** les composés photoexcitants sont liés de manière covalente aux composés réticulables.

3. Procédé selon la revendication 1, **caractérisé en ce que** l'on met en oeuvre un composé photoexcitant qui cesse de réagir lors de la réaction de réticulation, et que l'on détermine le taux de réticulation au moyen d'une mesure de l'intensité de la raie spectrale du composé photoexcitant.

4. Procédé selon la revendication 1, **caractérisé en ce que** l'on détermine un gradient de profondeur de la réticulation à l'intérieur de la couche de colle autoadhésive, au moyen d'une mise au point du faisceau de mesure à différentes profondeurs de la couche.

5. Procédé selon la revendication 1 ou 4, **caractérisé en ce que** l'on ajuste, afin de choisir le plan de profondeur, la position du foyer à l'intérieur de l'échantillon, par un mouvement de translation de l'échantillon au moyen d'une platine de déplacement, ou par mouvement de translation du foyer au travers de l'échantillon, de préférence au moyen d'un objectif à mouvement piézomécanique.
